# EUROPÄISCHE PATENTSCHRIFT

(11) **EP 1 102 810 B1**
(45) Veröffentlichungstag und Bekanntmachung des Hinweises auf die Patenterteilung: **06.11.2002**
(21) Anmeldenummer: 99939785.4
(22) Anmeldetag: 06.08.1999
(51) Int. Cl.: C08K 5/00, A61L 9/04, A01N 25/18

(54) **POLYMERE UND KUNSTSTOFFE MIT LANG ANDAUERNDER DUFTWIRKUNG UND DEREN ANWENDUNG**
POLYMERS AND PLASTICS WITH LONG-LASTING ODOR AND THE USE THEREOF
POLYMERES ET PLASTIQUES A ODEUR PERSISTANTE ET LEUR UTILISATION

(30) Priorität: 07.08.1998 DE 19842203
(43) Veröffentlichungstag der Anmeldung: 30.05.2001
(73) Patentinhaber: BASF AKTIENGESELLSCHAFT, 67056 Ludwigshafen (DE)
(72) Erfinder: ANDERLIK, Rainer, D-69126 Heidelberg (DE); KREMESKÖTTER, Jens, D-67063 Ludwigshafen (DE); MAILAHN, Elmar, D-67547 Worms (DE); GÜNTHERBERG, Norbert, D-67346 Speyer (DE); ITTEMANN, Peter, D-68623 Lampertheim (DE); HOFMANN, Jürgen, D-67069 Ludwigshafen (DE); SACK, Heinrich, D-67454 Ha loch (DE)
(74) Vertreter: Bardehle, Heinz, Dipl.-Ing.
(86) Internationale Anmeldenummer: EP9905703
(87) Internationale Veröffentlichungsnummer: WO00008095

(56) Entgegenhaltungen:
- FR-A- 2 675 387
- US-A- 4 734 278

## Beschreibung

Die Erfindung betrifft ein Verfahren zur Herstellung duftender Polymere und Kunststoffe, das duftende Polymer oder den duftenden Kunststoff selbst, sowie eine Formmasse und einen Gegenstand die das duftende Polymer oder den duftenden Kunststoff enthalten.

Im Stand der Technik bestehen seit längerem Bemühungen, Kunststoffe herzustellen, die duften. Dabei treten in der Praxis erhebliche Probleme auf. Mischt man den vorgesehenen Kunststoff mit der erforderlichen Menge eines gewünschten Duftstoffs, beispielsweise ein Parfüm, und verarbeitet die Mischung anschließend zu Formteilen, dann verdampft der überwiegende Teil des Duftstoffs oder wird thermisch abgebaut. Bei dem tatsächlich im Kunststoff verbliebenen Anteil des Duftstoffs besteht zusätzlich die Gefahr, daß sich der Duftstoff nach dem Abkühlen und Verfestigen des Kunststoffs von diesem abtrennt. Als Folge davon tritt der Duftstoff auf die Oberfläche des verfestigten Kunststoffs aus und verleiht dieser ein "fettes", unansehnliches und deformiertes Aussehen. Außerdem sind durch dieses Verfahren hohe Verluste des teueren Duftstofss unvermeidbar.

Um diese Nachteile zu vermeiden, ist im Stand der Technik durch die DE-A-16 94 055 bekannt geworden, ein Siliciumdioxidpulver als Trägerstoff mit einem flüssigen Duftstoff zu vermischen, bis das erhaltene Gemisch Klümpchen bildet. Zu diesen Klümpchen gibt man nochmals Siliciumdioxidpulver mit einem geringeren scheinbaren spezifischen Gewicht als das des zunächst verwendeten Siliciumdioxids und bildet Klümpchen einer Größe von nicht mehr als 0,05 mm. Diese werden dann mit dem Kunststoff gemischt.

Nachteilig bei diesem Verfahren ist, daß in dem so verarbeiteten Kunststoff ein anorganischer Feststoff enthalten ist, der die Materialeigenschaften des Kunststoffs, wie Schlagzähigkeit und Transparenz, nachteilig beeinflussen kann.

Die DE-A-37 21 916 geht von pulverförmigen porösen Trägerstoffen aus, die sowohl anorganischer wie auch organischer Herkunft in Form von Kunststoffen oder Kunststoffgemischen sein können. Der gewünschte Duftstoff wird an den porösen Trägerstoff adsorbiert und mit einem Kunststoff zur Weiterverarbeitung durch z.B. Extrudieren vermischt.

Während der Verarbeitung der Kunststoffe erfolgt die Diffusion des Duftstoffs in die Polymermatrix. Nachteilig ist dabei, daß auch diese Diffusion des Duftstoffs in die Polymermatrix während der Verarbeitung zu einem Duftstoffverlust führen kann, da der Duftstoff bedingt durch die Porosität des jeweiligen Trägermaterials in den Poren des Trägers eher adsorbiert als absorbiert wird.

Ausgehend von diesem Stand der Technik lag der vorliegenden Erfindung die Aufgabe zugrunde, ein Verfahren, das eine wirtschaftliche Herstellung duftender Polymere, insbesondere duftender Kunststoffe mit lang andauernder Duftwirkung ermöglicht und diese duftenden Polymere und diesen duftenden Kunststoff selbst bereitzustellen.

Gelöst wird diese Aufgabe durch ein Verfahren, bei dem ein zerkleinertes oder feinteiliges erstes Polymermaterial, insbesondere Kunststoffmaterial, mit einem gewünschten Duftstoff gemischt, über einen vorherbestimmten Zeitraum aufquellen gelassen und anschließend unter vorherbestimmtem Druck und vorherbestimmter Temperatur weiterverarbeitet wird. Durch das Mischen und Quellen lassen des zerkleinerten oder feinteiligen ersten Polymermaterials mit dem gewünschten Duftstoff über einen vorherbestimmten Zeitraum kann der Duftstoff in jedes der Partikel des ersten Polymermaterials einziehen. Die Polymerpartikel werden mit dem Duftstoff regelrecht beladen. Entsprechend wird unter Aufquellen lassen im Sinne der vorliegenden Erfindung das Aufsaugen des Duftstoffs in die Polymermatrix bzw. das Polymernetzwerk des als Träger verwendeten ersten Polymers verstanden. Dazu ist es Voraussetzung, daß der Duftstoff in dem ersten Polymermaterial homogen verteilt vorliegt. Bei makroporösem Material würden - wie im Stand der Technik - nur mit Duftstoff gefüllte Poren entstehen, ohne den Polymerverbund selbst zu beladen. Die Weiterverarbeitung des so gebildeten duftenden Polymers oder Kunststoffs kann in üblicher Weise durch Aufschmelzen und anschließendes Homogenisieren erfolgen, wenn der Duftstoff eine ausreichende thermische Stabilität aufweist. Für thermisch weniger stabile Duftstoffe werden weiter unten besondere Weiterverarbeitungsmöglichkeiten angegeben.

Gemäß der Ausführungsform des erfindungsgemäßen Verfahrens wird das erste Polymermaterial nach dem Aufquellen lassen mit dem Duftstoff mit einem zweiten Kunststoffmaterial gemischt und dann aufgeschmolzen und homogenisiert werden. Es bildet sich so eine kompakte Masse, die das duftende Polymermaterial zusammen mit dem zweiten Kunststoffmaterial in makroskopisch annähernd homogener Verteilung aufweist. Bei dem ersten und zweiten Material wurde im Sinne dieser Erfindung zwischen erstem Polymermaterial als Trägermaterial und zweitem Kunststoffmaterial unterschieden, um deutlich zu machen, daß das erste Polymermaterial zwar ein thermoplastischer Kunststoff sein kann, aber nicht zwangsläufig sein muß.

Das zweite Kunststoffinaterial kann ebenfalls zerkleinert vorliegen, was aber nicht zwangsläufig erforderlich ist.

Das erste Polymermaterial und das zweite Kunststoffmaterial sind voneinander verschieden. Auf diese Weise entsteht ein duftendes Polymer.

Als erstes Polymermaterial wird besonders ein Kunststoff in Form eines partikelförmigen, vernetzten Kunststoffes eines Elastomers verwendet, der auch Kautschukeigenschaften aufweist, mit einer Glasübergangstemperatur Tg von 0°C oder darunter, die unterhalb der Glasübergangstemperatur Tg des zweiten Kunststoffmaterials, besonders bevorzugt unterhalb von - 10°C, liegt.

Derartige erste Polymermaterialien lassen sich mit den jeweils ausgewählten Duftstoffen in der Weise tränken, daß sie ein mikroskopisch kleines Netzwerk bilden, in das die Duftstoffe aufgenommen werden und dabei das Netzwerk aufquellen. Als Duftstoff kann ein Duftstofföl verwendet werden. Eine besondere Verwendung der nach dem erfindungsgemäßen Verfahren hergestellten Polymere oder Kunststoffe kann dann erfolgen, wenn als Duftstoffe Pheromone und/oder Ökomone verwendet werden. Bisher werden bei der Insektenbekämpfung erfolgversprechend mit Pheromonen beschichtete oder getränkte Plättchen eingesetzt. Da die Anwendung solcher Pheromonfallen meist in der freien Natur erfolgt, sind diese Produkte der Witterung ausgesetzt und müssen daher häufig erneuert werden, weil der Wirkstoff ausgewaschen wird. Durch Anwendung des erfindungsgemäßen Verfahrens gelingt es, diese Duftstoffe in den jeweils vorgesehenen Kunststoff einzuarbeiten, um so die Duftstoffe vor dem Einfluß der Witterung zu schützen und sie als dauerhaft riechende Scheiben, Platten oder sonstige Formkörper zu verwenden. Das erfindungsgemäße Verfahren zur Herstellung duftender Polymere oder Kunststoffe ist daher nicht nur auf solche Polymere oder Kunststoffe beschränkt, die der menschlichen Geruchsempfindung zugänglich sind, sondern umfaßt auch solche duftenden Polymere oder Kunststoffe, deren Duft nur von den feinen Geruchsnerven der Tiere, insbesondere der Insekten wahrgenommen werden kann.

Das Mischen des ersten Polymermaterials mit diesem Duftstoff oder Duftstofföl kann in einem geschlossenen Behälter durchgeführt werden. Dadurch ist gewährleistet, daß das Duftstofföl vollständig für die Beladung des ersten Polymermaterials zur Verfügung steht und nicht in die Umgebung abgegeben wird. Zur Herstellung des Pulvers des ersten Polymermaterials eignen sich beispielsweise sprühgetrocknete Polymer- oder Kunststoffdispersionen.

In Abhängigkeit von der Art des eingesetzten Duftstoffs, insbesondere seiner Temperaturstabilität, können nach dem ersten Arbeitsschritt, der darin besteht, das erste Polymermaterial in Form eines Pulvers mit dem Duftstoff zu mischen und aufquellen zu lassen, in dem weiteren Arbeitsschritt zur Bildung des duftenden Polymers oder Kunststoffs individuell auf den Duftstoff abgestimmte Verarbeitungsmodifikationen vorgesehen werden. Das zweite Kunststoffmaterial kann dabei in gemahlener, Pulver- oder Granulatform eingesetzt werden.

Bei sehr temperaturlabilen Duftstoffen kann die Weiterverarbeitung in der Weise erfolgen, daß nach dem Aufquellen lassen des ersten Polymermaterials dessen Mischen mit dem zweiten Kunststoffmaterial bei hohem Druck bei etwa Raumtemperatur oder durch geringfügiges Erwärmen bis unterhalb der Glasübergangstemperatur Tg des zweiten Kunststoffmaterials, vorzugsweise bis kurz unterhalb Tg, erfolgt. Als zweites Kunststoffinaterial wird dann vorzugsweise und unter Ausnutzung des Kalten Flusses ein solches ausgewählt, das bereits bei niedriger Temperatur schmilzt. Das zweite Kunststoffmaterial kann das gleiche sein, wie das erste Polymermaterial, es kann aber auch davon verschieden sein. Eine solche geschilderte Vorgehensweise ist insbesondere für Pheromone oder allgemein Ökomone geeignet.

Bei weniger bis gar nicht temperaturempfindlichen Duftstoffen kann nach dem Aufquellen lassen des ersten Polymermaterials dessen Mischen mit dem zweiten Kunststoffmaterial ebenfalls bei hohem Druck und Erwärmen auf eine Temperatur, die oberhalb der Glasübergangstemperatur Tg entweder des ersten Polymermaterials oder des zweiten Kunststoffmaterials liegt, vorzugsweise jeweils kurz oberhalb von Tg, vorgesehen werden.

Es ist aber bei Duftstoffen, bei welchen keine besondere Temperaturempfindlichkeit vorliegt, ohne weiteres möglich, übliche Druck- und Temperaturbedingungen bei der Verarbeitung, z.B. mittels Extrudieren, vorzusehen. Die Mischung aus dem mit dem Duftstoff beladenen ersten Polymerpulver und dem zweiten Kunststoffmaterial, z.B. in Form eines Granulats, kann dann in einem Mischaggregat bei Normaldruck und erhöhter Temperatur aufgeschmolzen und homogenisiert werden. Das Aufschmelzen in dem Mischaggregat kann beispielsweise in einem Extruder oder Kneter durchgeführt werden. Nach dem Homogenisieren kann die resultierende Schmelze granuliert und nach den üblichen Verarbeitungsmethoden für thermoplastische Formmassen weiterverarbeitet werden.

Vorzugsweise werden als erstes Polymermaterial Thermoplaste, thermoplastische Elastomere, Pfropfkautschuk, Polymere auf Basis nachwachsender Rohrstoffe oder Polymere sowie Polymermischungen auf Stärkebasis verwendet. Besonders bevorzugt wird das erste Polymermaterial ausgewählt aus Polymilchsäure als Beispiel eines Polymers auf der Basis nachwachsender Rohstoffe, Polyurethanen, Polyamiden, Polyestem, Polybutylenterephthalaten und Polymeren, Copolymeren, Blockpolymeren, Triblockcopolymeren oder Pfropfcopolymeren von Styrol, Butadien, Acrylnitril, (Meth)-acrylat und Acrylestem. Die vorgenannten Materialien sind ebenfalls zur Verwendung als zweites Kunststoffmaterial geeignet, wobei dann noch Mischungen davon mit Polycarbonaten in Betracht kommen. Beispiele für die vorgenannten Polymere, Copolymere oder Triblockcopolymere sind Polystyrol (PS), hier insbesondere schlagzähes Polystyrol, Polybutadien, Polyacrylate, Polymethylmethacrylate (PMMA), Acrylnitril-Butadien-Styrol-Copolymere (ABS), Acrylnitril-Styrol-Acrylester-Copolymere (ASA), Styrol-Acrylnitril-Copolymere (SAN), Styrol-Butadien-Copolymere (SBR), Acrylnitril-Butadien-Copolymere (NBR), Styrol-Butadien-Styrol-Triblockcopolymere (SBS). Es wurden auch gute Ergebnisse bei Verwendung von gemahlenem Superabsorbermaterial erzielt.

Das erste Polymermaterial kann beispielsweise als entwässertes Emulsionspolymer vorliegen, das entweder durch Sprühtrocknung oder durch Koagulation und Trocknung gewonnen wurde. Durch Fällung aus Lösungen gewonnene feinteilige Polymerpulver sind als erstes Polymermaterial ebenfalls gut geeignet.

Die Erfindung betrifft auch das duftende Polymer oder den duftenden Kunststoff selbst, das oder der nach dem erfindungsgemäßen Verfahren erhalten wurde. Im folgenden wird zur Vereinfachung von duftenden Kunststoffen gesprochen, wobei hier die Möglichkeit, daß aufgrund der verwendeten Materialien ein duftendes Polymer, das keinen Kusntstoff darstellt, hergestellt wird, eingeschlossen sein soll. Der duftende Kunststoff kann in Granulatform vorliegen und dann beispielsweise zur Abwehr von Tieren eingesetzt werden. Unter Tieren können Schädlinge, insbesondere auch Insekten verstanden werden. Die Abwehr von Tieren umfaßt aber auch das Vertreiben von Haustieren, wie Hunden und Katzen und anderen Kleintieren, von solchen Orten, an denen diese gern ihre Geschäfte verrichten wollen, dies aber unerwünscht ist. Vorzugsweise kann hier ein Granulat aus dem duftenden Kunststoff eingesetzt werden und besonders bevorzugt ein Granulat aus bioabbaubaren Kunststoffen, die mit entsprechenden, an sich bekannten, die Tiere vertreibenden Duftstoffen beladen sind. Solche bioabbaubaren Kunststoffe sind beispielsweise Polymere auf der Basis nachwachsender Rohstoffe, wie Polymilchsäurepolymere und Polymermischungen auf Stärkebasis oder auf synthetischer Basis, zum Beispiel auf der Basis von Polyesteramiden oder verzweigten Polyestem. Der Vorteil bei der Verwendung des erfindungsgemäßen duftenden Kunststoffs liegt darin, daß der Wirkstoff über eine lange Zeit abgegeben und auch bei Regen nicht von dem Kunststoff entfernt werden kann.

Die Erfindung betrifft außerdem eine Formmasse, die ein solches dufttendes Polymer oder einen solchen duftenden Kunststoff enthält. Je nach Duftstoffanteil im fertigen Kunststoff, der beispielsweise als Granulat vorliegt, kann dieser auch als Masterbatch eingesetzt werden. Der höhere Duftstoffanteil kann beispielsweise durch das Verändern des Mischungsverhältnisses aus erstem Polymermaterial und zweitem Kunststoffmaterial erreicht werden.

Die Erfindung betrifft auch die Verwendung der Formmasse, die ein duftendes Polymer oder einen duftenden Kunststoff enthält oder die Verwendung des duftenden Polymers oder Kunststoffs selbst zur Veränderung und/oder Verbesserung der Geruchseigenschaften von Gegenständen. Hier steht eine Vielzahl von Anwendungsmöglichkeiten offen, wobei insbesondere solche von Vorteil sind, die nicht zu vermeidende, unangenehme Eigengerüche von Kunststoffen in verschiedensten Anwendungen überdecken. Hier ist beispielsweise der Innenbereich von Kraftfahrzeugen zu nennen, in welchem aus Kunststoff hergestellte Bauteile, wie Armaturentafelträger, Mittelkonsolen, Auskleidungsfolien usw. im Neuzustand stark nach dem Kunststoff riechen können. Unter Verwendung der duftenden Kunststoffe oder der daraus hergestellten Formmassen kann dieser unangenehme Geruch überdeckt werden. Da dem Fachmann eine sehr breite Palette unterschiedlichster Duftstoffe bekannt ist, die alle nach dem erfindungsgemäßen Verfahren in den Kunststoff eingearbeitet werden können, stehen Autoherstellern vielfältige Variationsmöglichkeiten zur Verfügung. Als Beispiele werden hier nach Leder, frischer Raumluft, Blumen, Wald oder Parfüms duftende Kunststoffe genannt.

Eine weitere Anwendungsmöglichkeit besteht im Bereich des Überdeckens unangenehmer Eigengerüche von Baumaterialien, wie zum Beispiel im Fensterrahmen oder Scheuerleistenbereich. Auch hier werden die in den ersten Wochen nach der Fertigstellung auftretenden Eigengerüche als unangenehm empfunden und können beispielsweise mit einem Zitrusduft überdeckt werden.

Auch sonstige aus Kunststoff gefertigte Gegenstände, wie Staubsaugergehäuse oder Kunststoffteile im Kühlschrank, können in unangenehmer Weise nach dem Kunststoff riechen, aus dem sie hergestellt sind, zum Beispiel einem ABS-Kunststoff oder schlagzähem Polystyrol. Auch diese Gerüche können bei Verwendung von duftenden Kunststoffen durch eine Vielzahl gewünschter Duftvarianten überdeckt werden.

Die Erfindung betrifft außerdem einen Gegenstand, der das duftende Polymer oder den duftenden Kunststoff und/oder die das duftende Polymer oder den duftenden Kunststoff aufweisende Formmasse enthält. Dieser Gegenstand kann in Form von Kunststoffteilen und Halbzeugen vorliegen, bspw. als Spritzgußgegenstand oder in Form von Folien, Platten, Rohren und Profilen. Der aufgrund des enthaltenen duftenden Polymers oder Kunststoffs zumindest teilweise selbstduftende Gegenstand kann vielfältig verwendet werden. Zum einen ist er den bereits in Hinblick auf das duftende Polymer oder den duftenden Kunststoff und die Formmasse, welche das duftende Polymer oder den duftenden Kunststoff aufweist, erläuterten Verwendungen zugänglich. Zum anderen kann er aber auch zur Verbesserung des Raumklimas verwendet werden. Dann wirkt er als Duftspender, wobei es sinnvoll ist, den Anteil des in dem Kunststoff enthaltenden Duftstoffs nicht zu stark zu dosieren, so daß der Gegenstand nur einen dezenten bis kaum wahrnehmbaren Duft verbreitet, wenn er in Büro- oder sonstigen Wohnräumen verwendet wird. Eine höhere Dosierung des Duftstoffs könnte allerdings dann angezeigt sein, wenn der als Duftspender verwendete Gegenstand im Sanitärbereich eingesetzt wird. Wenn der Gegenstand in Spritzgußverarbeitung hergestellt worden ist, kann er vorteilhafterweise in jede beliebige Form gebracht werden. So können beispielsweise nach Zitronen duftende Zitronen, Tannenbäume, denen ein Fichtelnadelduft entströmt und beliebige andere Gegenstände mit den dazugehörigen Duftnoten hergestellt werden. Diese duftenden Gegenstände eignen sich daher auch als Dekorationsgegenstände.

Eine andere Möglichkeit besteht darin, den duftenden Kunststoff in Gegenstände des täglichen Bedarfs, wie Haushaltsgegenstände, Telefone, Computergehäuse usw. einzuarbeiten. Die entsprechenden Duftstoffe können so gewählt werden, daß positive Kaufanreize geweckt, das Allgemeinbefinden gehoben oder auch die Konzentrationsfähigkeit gestärkt wird. Außerdem können Werbemittel, wie Kugelschreiber oder andere Kleinteile, mit einem kundenspezifischen Duft versehen werden, indem diese Gegenstände den duftenden Kunststoff oder die Formmasse, die den duftenden Kunststoff aufweist, enthalten. Daneben sind auch duftende Grußkarten, CD- und MC-Verpackungen oder Telefon- und Chip-Karten herstellbar.

Stellt man die Gegenstände in Form von Folien her, können sie als Verpackungsfolien, als selbstklebende Duftetiketten für Kühlschränke, zum Beispiel um Fischgeruch zu vermeiden, oder für Kleiderschränke und sonstige Aufbewahrungsboxen verwendet werden. Hervorzuheben ist, daß durch die Wahl des entsprechenden Duftstoffs auch die Abwehr von Schädlingen über einen lang andauernden Zeitraum möglich wird. Dabei ist der Begriff Schädling breit zu verstehen und umfaßt sowohl Insekten als auch Kleintiere, wie Mäuse, Ratten, Marder usw.. Durch den Einsatz der entsprechenden Duftstoffe können im Bereich der Elektrotechnik entsprechende abschreckende Kabelisoliermaterialien eingesetzt werden. Dabei ist nicht nur ein Kabelisoliermaterial, sondern jegliches Kleintierverbiß-gefährtetes Baumaterial in Betracht zu ziehen. In Bezug auf die abzuwehrenden Schädlinge im Bereich der Insekten ist neben den verschiedenen Arten von Motten auch an Mücken und Ameisen zu denken.

Die genannten Verwendungsbeispiele für den duftenden Kunststoff, die Formmasse oder den Gegenstand, welche jeweils den duftenden Kunststoff aufweisen, sind so vielfältig, daß sie hier nur exemplarisch und beispielhaft aufgezeigt werden können. Die Verwendung läßt sich noch auf beliebige andere Bereiche des täglichen Lebens übertragen. So können zum Beispiel auch Kinderspielzeuge, die nach verschiedenen Aromen duften, durch Wahl eines geeigneten duftenden Kunststoffs hergestellt werden.

Im folgenden soll die Erfindung anhand von Beispielen näher erläutert werden.

### Beispiel 1:

Das erste Polymermaterial besteht aus einem sprühgetrockneten Polybutadien- und Polyacrylatkautschuk. Dieser getrocknete Kautschuk wurde zu 200 g in ein 1000 ml Schraubdeckelglas gefüllt und mit 10 oder 20% des Duftstoffes Citral oder Citronellol versetzt. Die Gläser wurden dann 48 h lang auf einem Rolltisch gerollt. Dabei wurde der Duftstoff homogen in den Kautschuk eingemischt.

Der so vorbehandelte Kautschuk wurde zum einen mit einem Styrol-Acrylnitrilpolymer, mit einem Schmelzindexwert MVI (220°/10 kg) von 62 g/10 min zu 10 oder 20% abgemischt und ein anderesmal mit Polyamid 6, mit einem Schmelzindexwert MVI (275°/5 kg) von 120 g/10 min im gleichen Mischungsverhältnis. Dann wurde die Kautschuk-Granulatmischung jeweils auf einem Extruder mit gegensinnig drehenden Schneckenwellen konfektioniert. Dabei wurden folgende Maschinenparameter eingestellt:

| | | |
|---|---|---|
| Schneckendrehzahl | | 200 Upm |
| Temperaturen | Zuführ | 30°C, |
| | Verfahrensteil | 220°C |
| Durchsatz | | 1,5 kg/h |

In Tabelle 1 sind die gemäß Beispiel 1 durchgeführten Versuche dargestellt.

### Beispiel 2:

Bei diesem Beispiel besteht das erste Polymermaterial aus einem mit einem Wirbelschichttrockner getrockneten Pfropfkautschuk, der hergestellt wurde, wie in der DE-AS-24 27 960 angegeben. Die Fällung erfolgte mittels MgSO₄ mit anschließender Vorentwässerung auf einen Wassergehalt von etwa 28% durch Zentrifugieren. 100 Teile dieses Pfroptkautschuks wurden mit 25 Teilen Citronellol versetzt und wie in Beispiel 1 beschrieben gemischt.

40 Teile des so vorbehandelten Pfropfkautschuks wurden mit 60 Teilen einer Styrol-Acrylnitril-Copolymer-Schmelze (SAN) bei 230°C auf einem Extruder mit gleichsinnig drehenden Schneckenwellen intensiv vermischt. Der Acrylnitrilanteil in der SAN-Schmelze betrug 35 %. Es wurde eine intensiv nach Zitrone duftende Schmelze erhalten, aus der Formteile, wie Platten und Stäbe, gespritzt wurden, die nach wie vor stark nach Zitrone dufteten. Es wurden auch Folien hergestellt.

Die so hergestellten Formteile wurden in Abständen von mehreren Monaten einem Geruchstest unterzogen. Dabei konnte auch nach einer Lagerzeit von 10 Monaten noch ein ausgeprägter Zitronenduft nachgewiesen werden.

### Beispiel 2a:

Die gemäß Beispiel 2 hergestellte Mischung aus dem Pfropfkautschuk und dem Citronellol wurde in der Weise mit SAN gemischt, daß in der fertigen Mischung nur noch etwa 30 % des Duftstoff-getränkten Pfropfkautschuks vorlagen. Auch bei dieser Mischung war ein starker Zitronengeruch feststellbar.

Es wurde wieder über einen Zeitraum von mehreren Monaten ein Geruchstest vorgenommen. Dabei wurde nach 10 Monaten noch ein dezenter, als angenehm empfundener, fruchtiger Duft festgestellt.

### Beispiel 2-1 bis 2-7:

Wie in Beispiel 2 angegeben, wurden aus weiteren, in der Tabelle 2 angegebenen Polymer- und Kunststoffmaterialien mit den ebenfalls dort angegebenen Duftstoffen erfindungsgemäß duftende Kunststoffe hergestellt.

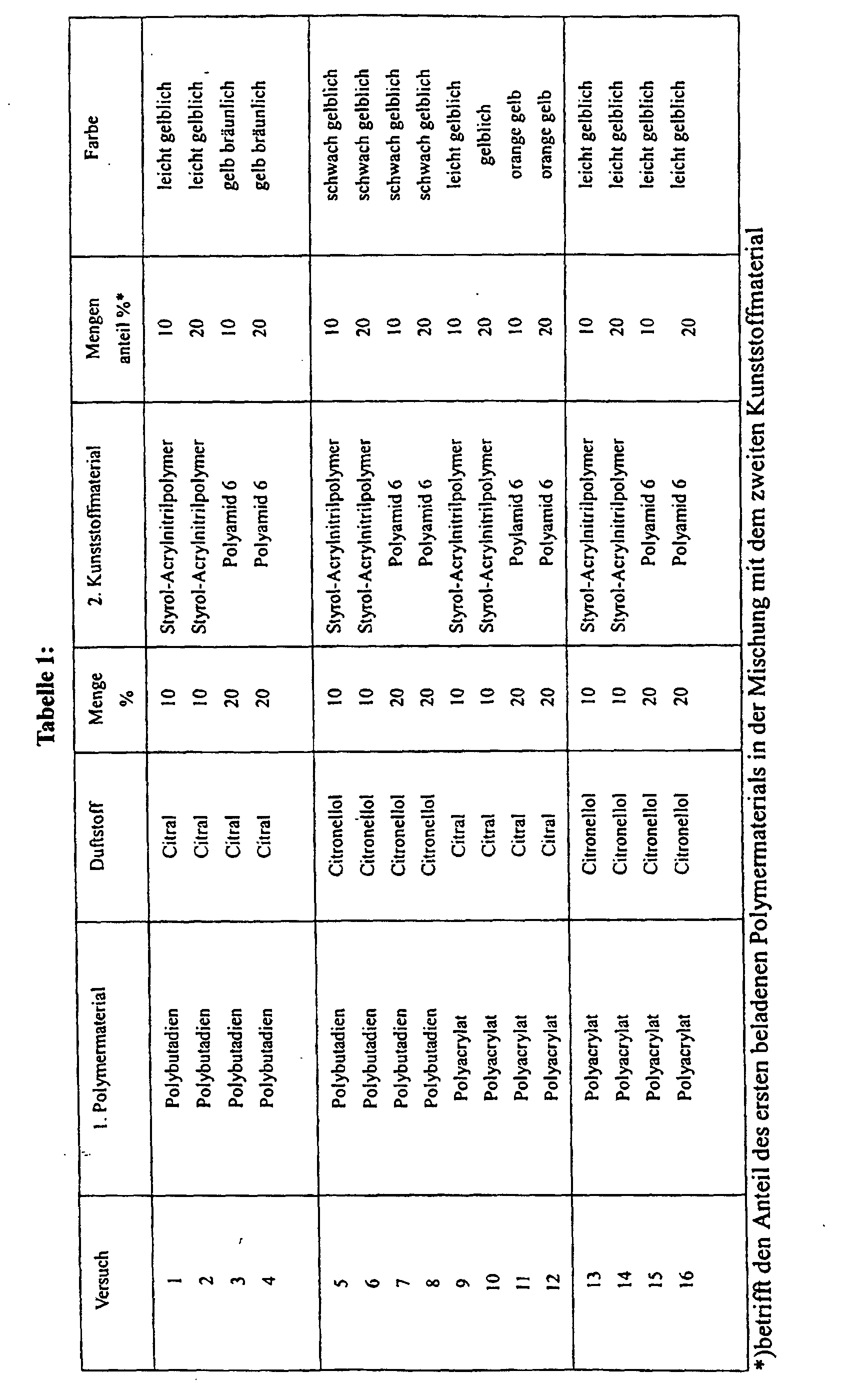

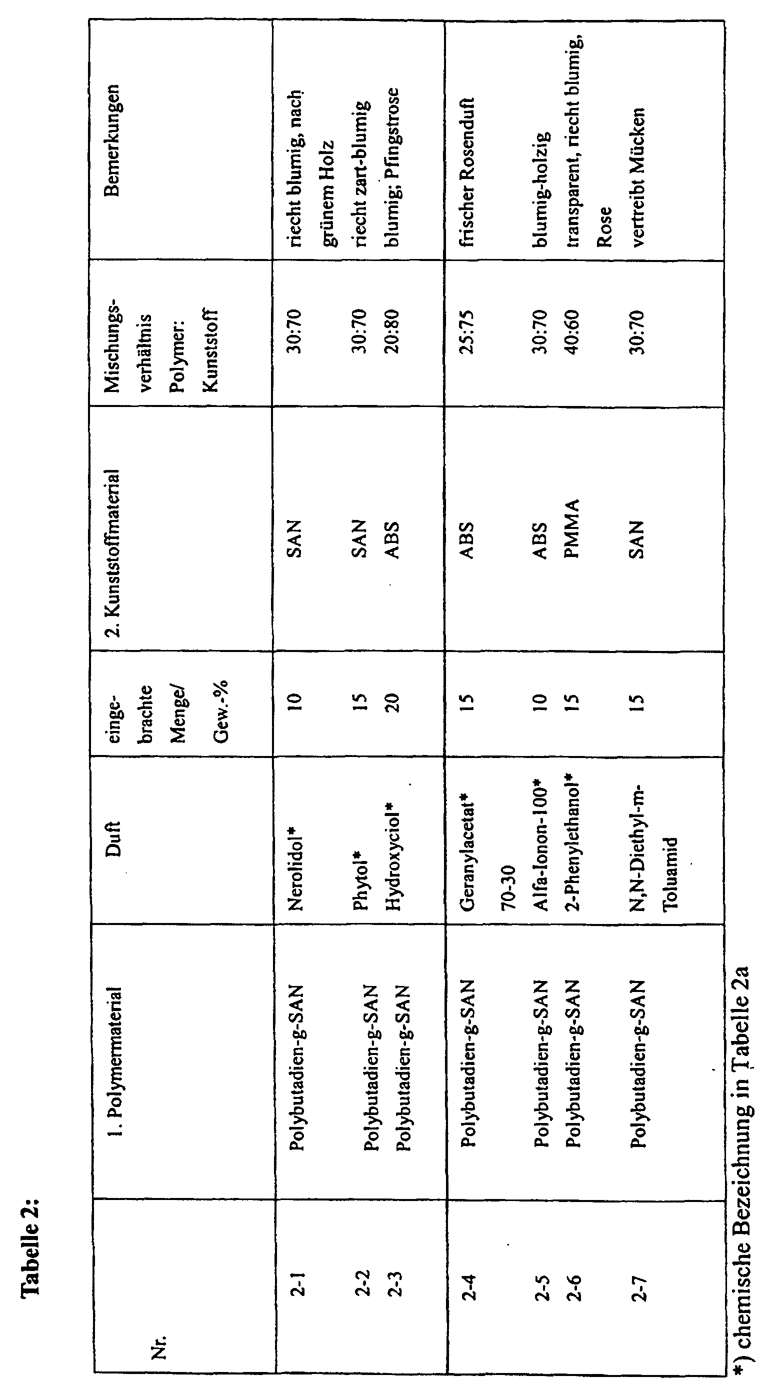

**Tabelle 2a:**

| Duftstoff BASF-Handelsname | chemische Bezeichnung |
|---|---|
| Nerolidol | 3,7,11-Trimethyl-dodecatrien-3-ol |
| Phytol | 3,7,11,15-Tetramethyl-hexadec-2-en-1-ol |
| Hydroxyciol | 3,7-Dimethyloctan-1,7-diol |
| Geranylacetat | Mischung aus 70 % Geranylacetat und 30 % Nerylacetat |
| Alfa-Ionon 100 | 4,-(2,6,6-Trimethyl-2-cyclohexen-1-yl)-3-buten-2-on |

### Beispiel 3

Die gemäß Beispiel 1 hergestellte Mischung aus dem Pfropfkautschuk und dem Duftöl wurde ebenso mit den in Tabelle 3 angegebenen Materialien und Duftstoffen hergestellt. Bei den unter 3-11 bis 3-14 genannten Materialien handelt es sich um vollständig bioabbaubare Polymere. Die eingesetzten Duftstoffe sind temperaturempfindlich.

Nach dem Einmischen des jeweiligen Duftstoffes in das erste Polymermaterial wird dieses mit dem jeweils angegebenen pulver- oder granulatförmig vorliegenden zweiten Kunststoffinaterial vermischt und unter milden Bedingungen, unter Erwärmen bis knapp über die Glasübergangstemperatur Tg des eingesetzten Thermoplasten in eine Form gepreßt.

Alternativ dazu wurden die sich ergebenden Mischungen aus dem ersten Polymermaterial und dem zweiten Kunststoffmaterial zwischen geheizten Walzen zu Folien verarbeitet.

Bei dieser Verfahrensvarianten werden Verarbeitungstemperaturen gewählt, die etwa 50 bis 150°C unter den bei der Extrusion üblichen Temperaturen liegen.

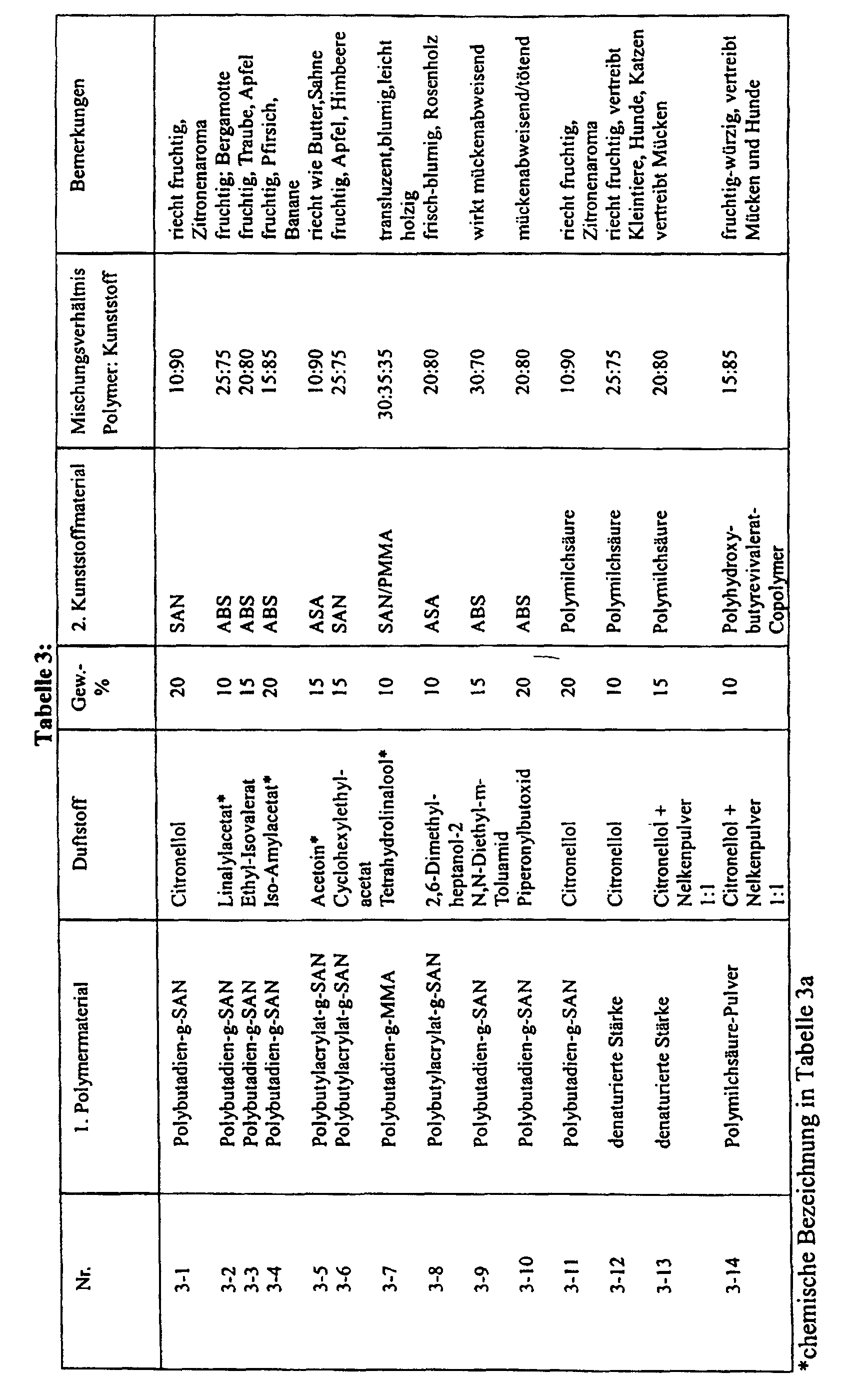

**Tabelle 3a:**

| Duftstoff BASF-Handelsname | chemische Bezeichnung |
|---|---|
| Linalylacetat | 3,7-Dimethyl-1,6-Octadien-3-yl-Acetat |
| Iso-Amylacetat | 3-Methylbutylacetat |
| Acetoin | 3-Hydroxy-2-butanon |
| Tetrahydrolinalool | 3,7-Dimethyloctan-3-ol |

### Beispiel 4:

Die in diesem Beispiel beschriebene Verfahrensvariante in Form einer Kaltverpressung kann für besonders temperaturempfindliche Duftstofföle verwendet werden. Dabei wird der Effekt ausgenutzt, daß viele Kunststoffe unter hohem Druck zu fließen beginnen, auch wenn sie nicht ihre Schmelztemperatur erreicht haben.

Bei der Durchführung dieser Verfahrensvariante wurden die in Tabelle 4 angegebenen ersten Polymermaterialien mit den ebenfalls in Tabelle 4 angegebenen Duftstoffölen vermischt und aufquellen gelassen bis der jeweilige Duftstoff in das erste Polymermaterial völlig eingemischt war.

Als zweites Kunststoffmaterial wurden die in Tabelle 4 angegebenen Kunststoffe als Pulver oder feines Mahlgut eingesetzt. Dann wurden bei 50 bis 70°C unter 200 bar Druck Formkörper aus dieser Pulvermischung gepresst.

Dieses Verfahren ist besonders geeignet für niedrig siedende, pharmazeutisch wirksame Stoffe, insbesondere Naturstoffe. Auch für die in den Beispielen 3-11 bis 3-14 in Tabelle 3 angegebenen bioabbaubaren Polymere mit den ebenfalls dort angegebenen temperaturempfindlichen Duftstoffölen ist diese Verfahrensvariante sehr geeignet.

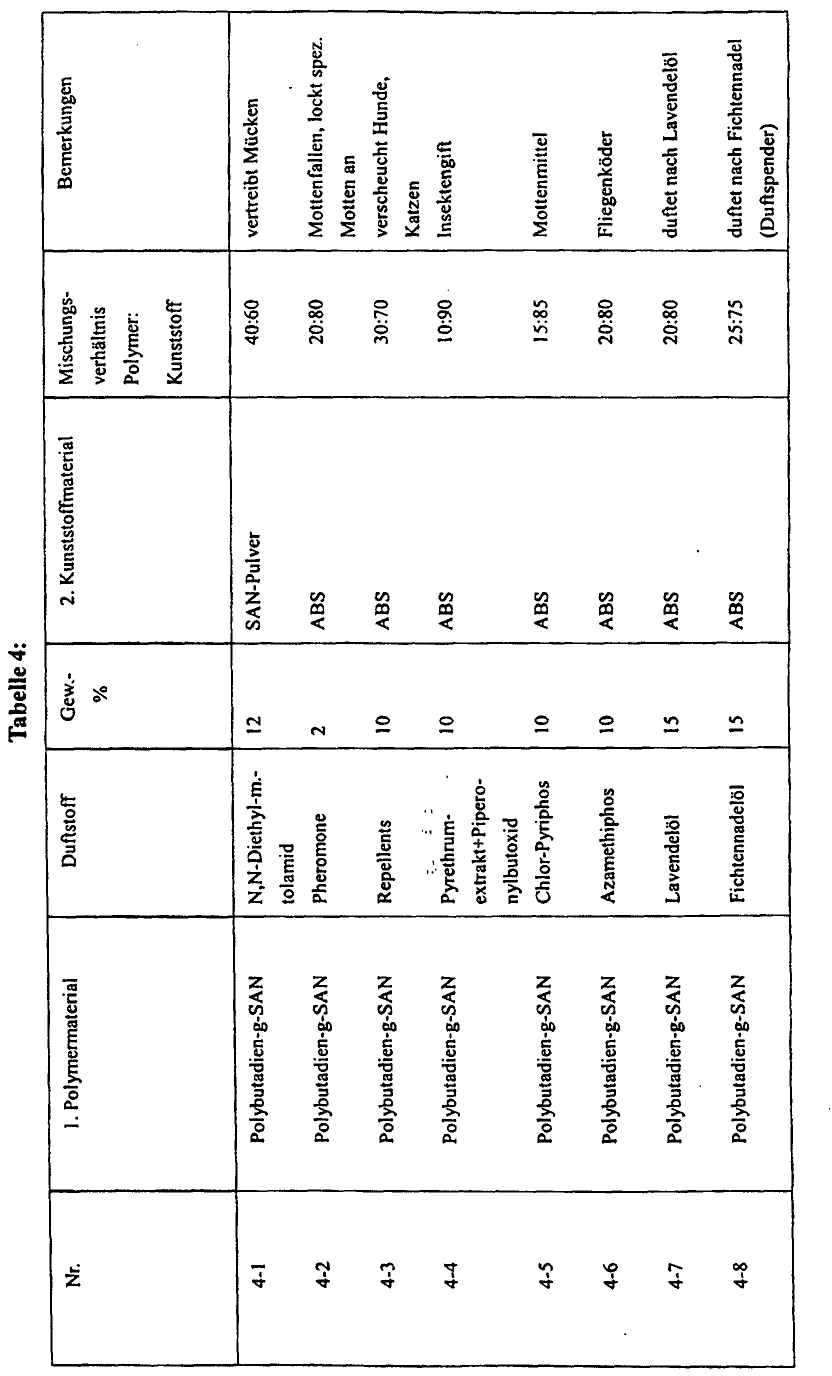

## Patentansprüche

1. Verfahren zur Herstellung duftender Polymere oder Kunststoffe, bei dem ein zerkleinertes oder feinteiliges erstes Polymermaterial mit einem gewünschten Duftstoff gemischt, über einen vorherbestimmten Zeitraum aufquellen gelassen und nach dem Aufquellen lassen mit dem Duftstoff mit einem zweiten Kunststoffmaterial gemischt wird, wobei das erste Polymermaterial verschieden ist von dem zweiten Kunststoffmaterial und ausgewählt wird aus einem partikelförmigen vernetzten Kunststoff oder einem thermoplastischen Elastomer, die Kautschukeigenschaften aufweisen mit einer Glasübergangstemperatur Tg von ≤ 0°C, die unterhalb der Glasübergangstemperatur des zweiten Kunststoffmaterials liegt.

2. Verfahren nach Anspruch 1, **dadurch gekennzeichnet, daß** als Duftstoff ein Duftstofföl verwendet wird.

3. Verfahren nach Anspruch 1 oder 2, **dadurch gekennzeichnet, daß** als Duftstoff Pheromone und/oder Ökomone verwendet werden.

4. Verfahren nach einem der Ansprüche 1 bis 3, **dadurch gekennzeichnet, daß** das Mischen und Aufquellen lassen des ersten Kunststoffs mit dem Duftstoff in einem geschlossenen Behälter durchgeführt wird.

5. Verfahren nach einem der Ansprüche 1 bis 4, **dadurch gekennzeichnet, daß** das erste Polymermaterial in Form eines Pulvers mit dem Duftstoff gemischt, aufquellen gelassen und anschließend mit dem zweiten Kunststoffmaterial in gemahlener, Pulver- oder Granulatform unter hohem Druck und bei Raumtemperatur, Erwärmen auf eine Temperatur, die unterhalb der Glasübergangstemperatur des zweiten Kunststoffmaterials liegt oder Erwärmen auf eine Temperatur, die über der Glasübergangstemperatur entweder des ersten Polymermaterials oder des zweiten Kunststoffmaterials liegt, weiterverarbeitet wird.

6. Verfahren nach einem der Ansprüche 1 bis 5, **dadurch gekennzeichnet, daß** als erstes Polymermaterial Thermoplaste, thermoplastische Elastomere, Pfropfkautschuk, Polymere auf der Basis nachwachsender Rohstoffe oder Polymere sowie Polymermischungen auf Stärkebasis verwendet werden.

7. Verfahren nach Anspruch 6, **dadurch gekennzeichnet, daß** das zweite Kunststoffmaterial ausgewählt wird aus Polymilchsäure, Polyurethanen, Polyamiden, Polyestern, Polyesteramiden, Polybutylentherephthalaten, Polymeren, Copolymeren, Blockcopolymeren, Triblockcopolymeren oder Pfropfcopolymeren von Styrol, Butadien, Acrylnitril, (Meth)-acrylat und Acrylestern sowie Mischungen davon mit Polycarbonaten.

8. Duftendes Polymer oder duftender Kunststoff, erhalten nach dem Verfahren gemäß einem der Ansprüche 1 bis 7.

9. Duftendes Polymer oder duftender Kunststoff nach Anspruch 8 in Granulatform.

10. Verwendung des duftenden Polymers oder Kunststoffs nach Anspruch 8 oder 9 zur Abwehr von Tieren.

11. Formmasse, die ein duftendes Polymer oder einen duftenden Kunststoff nach Anspruch 8 oder 9 enthält.

12. Verwendung der Formmasse nach Anspruch 11 oder des duftenden Polymers oder Kunststoffs nach Anspruch 8 oder 9 zur Veränderung und/oder Verbesserung der Geruchseigenschaften von Gegenständen.

13. Gegenstand, der ein duftendes Polymer oder einen duftenden Kunststoff gemäß Anspruch 8 oder 9 und/oder eine Formmasse gemäß Anspruch 11 enthält.

14. Gegenstand nach Anspruch 13 in Form von Kunststofformteilen und Halbzeugen.

15. Verwendung des Gegenstands nach Anspruch 13 oder 14 zur Verbesserung des Raumklimas.

16. Verwendung des Gegenstands nach Anspruch 13 oder 14 zur Abwehr von tierischen Schädlingen.

## Claims

1. A process for preparing odorant polymers or plastics, in which a comminuted or fine-particle first polymer material is mixed with a desired odorant, allowed to swell for a predetermined period, and, after being allowed to swell with the odorant, is mixed with a second plastic, where the first polymer material differs from the second plastic and is selected from particulate cross-linked plastics or from thermoplastic elastomers which have rubbery properties, with a glass transition temperature Tg of ≤ 0°C, which is below the glass transition temperature of the second plastic.

2. The process as claimed in claim 1, wherein the odorant used comprises an odorant oil.

3. A process as claimed in claim 1 or 2, wherein the odorant used comprises pheromones and/or ecomones.

4. A process as claimed in any of claims 1 to 3, wherein the first plastic is mixed and allowed to swell with the odorant in a closed container.

5. A process as claimed in any of claims 1 to 4, wherein the first polymer material in the form of a powder is mixed with the odorant, allowed to swell, and then further processed with the second plastic in ground, powder or pellet form under high pressure and at room temperature, and with heating to a temperature which is below the glass transition temperature of the second plastic, or with heating to a temperature which is above the glass transition temperature either of the first polymer material or of the second plastic.

6. A process as claimed in any of claims 1 to 5, wherein the first polymer material used comprises thermoplastics, thermoplastic elastomers, graft rubber, polymers based on renewable raw materials, or polymers or else polymer mixtures based on starch.

7. A process as claimed in claim 6, wherein the second plastic is selected from polylactic acid, polyurethanes, polyamides, polyesters, polyesteramides, and polybutylene terephthalates, or from polymers, copolymers, block copolymers, triblock copolymers, or graft copolymers of styrene, butadiene, acrylonitrile, (meth)acrylate, or of acrylic esters, and also mixtures of these with polycarbonates.

8. An odorant polymer or an odorant plastic obtained by the process as claimed in any of claims 1 to 7.

9. An odorant polymer or odorant plastic as claimed in claim 8 in pellet form.

10. The use of the odorant polymer or plastic as claimed in claim 8 or 9 for defense against animals.

11. A molding composition which comprises an odorant polymer or odorant plastic as claimed in claim 8 or 9.

12. The use of the molding composition as claimed in claim 11 or of the odorant polymer or plastic as claimed in claim 8 or 9 for altering and/or improving the odor properties of articles.

13. An article which comprises an odorant polymer or an odorant plastic as claimed in claim 8 or 9 and/or a molding composition as claimed in claim 11.

14. An article as claimed in claim 13 in the form of a plastic molding or a semifinished product.

15. The use of the article as claimed in claim 13 or 14 for improving room air quality.

16. The use of the article as claimed in claim 13 or 14 for defense against animal pests.

## Revendications

1. Procédé de préparation de polymères ou matières synthétiques odoriférants, dans lequel on mélange une première matière polymère fragmentée ou finement divisée avec une matière odorante souhaitée, on fait gonfler pendant un espace de temps prédéterminé et, après avoir laissé gonfler avec la matière odorante, on mélange avec une deuxième matière synthétique, la première matière polymère étant différente de la deuxième matière synthétique et étant choisie parmi une matière synthétique réticulée, particulaire, ou un élastomère thermoplastique, qui présentent des propriétés de caoutchouc, avec une température de transition vitreuse Tg ≤0°C, qui se situe en dessous de la température de transition vitreuse de la deuxième matière synthétique.

2. Procédé suivant la revendication 1, **caractérisé en ce que**, comme matière odorante, on utilise une huile odorante.

3. Procédé suivant l'une des revendications 1 et 2, **caractérisé en ce que**, comme matière odorante, on utilise des phéromones et/ou des écomones.

4. Procédé suivant l'une des revendications 1 et 3, **caractérisé en ce que** l'on effectue le mélange et le gonflement de la première matière synthétique avec la substance odorante dans un récipient fermé.

5. Procédé suivant l'une des revendications 1 à 4, **caractérisé en ce que** la première matière polymère est, sous la forme d'une poudre, mélangée et mise à gonfler avec la matière odorante et **en ce qu'**ensuite on continue à la traiter avec la deuxième matière synthétique sous une forme broyée, de poudre ou de granules, sous haute pression et à la température ambiante, par chauffage à une température qui est située en dessous de la température de transition vitreuse de la deuxième matière synthétique ou par chauffage à une température qui se trouve au-dessus de la température de transition vitreuse de la première matière polymère ou de la deuxième matière synthétique.

6. Procédé suivant l'une des revendications 1 à 5, **caractérisé en ce que**, comme première matière polymère, on utilise des matières thermoplastiques, des élastomères thermoplastiques, un caoutchouc de greffage, des polymères à base de matières premières qui se développent ultérieurement ou de polymères ainsi que de mélanges de polymères à base d'amidon.

7. Procédé suivant la revendication 6, **caractérisé en ce que** la deuxième matière synthétique est choisie parmi du polyacide lactique, des polyuréthannes, des polyamides, des polyesters, des polyesteramides, des polytéréphtalates de butylène, des polymères, des copolymères, des copolymères blocs, des copolymères à trois blocs ou des copolymères de greffage de styrène, de butadiène et d'acrylonitrile, du (méth)-acrylate et des esters acryliques ainsi que leurs mélanges avec des polycarbonates.

8. Polymère odoriférant ou substance synthétique odoriférante obtenu selon le procédé suivant l'une des revendications 1 à 7.

9. Polymère odoriférant ou substance synthétique odoriférante suivant la revendication 8, sous la forme d'un produit de granulation.

10. Utilisation du polymère ou substance synthétique odoriférant suivant la revendication 8 ou 9, pour la répulsion d'animaux.

11. Masse de façonnage qui contient un polymère odoriférant ou une matière synthétique odoriférante suivant l'une des revendications 8 et 9.

12. Utilisation de la masse de façonnage suivant la revendication 11 ou du polymère ou de la matière synthétique odoriférante suivant l'une des revendications 8 et 9, pour la modification et/ou l'amélioration des propriétés odorantes d'objets.

13. Objet, qui contient un polymère odoriférant ou une matière synthétique odoriférante suivant l'une des revendications 8 et 9 et/ou une masse de façonnage suivant la revendication 11.

14. Objet suivant la revendication 13, sous la forme de pièces façonnées en matière synthétique et de produits semi-finis.

15. Utilisation de l'objet suivant l'une des revendications 13 et 14, pour l'amélioration du climat d'un volume clos.

16. Utilisation de l'objet suivant l'une des revendications 13 et 14, pour la répulsion de parasites animaux.
